# DEMANDE DE BREVET EUROPEEN

(11) **EP 4 832 409 A1**
(43) Date de publication de la demande: **28.10.2026**
(21) Numéro de dépôt: 26173217.6
(22) Date de dépôt: 20.04.2026
(51) Int. Cl.: H04L 9/06

(54) **CIRCUIT ET PROCÉDÉ CRYPTOGRAPHIQUES POUR LA MISE EN OEUVRE D'ALGORITHMES DE LA FAMILLE KECCAK**

(30) Priorité: 23.04.2025 FR 2504312
(71) Demandeur: STMicroelectronics International N.V., 1228 Plan-les-Ouates, Geneva (CH)
(72) Inventeur: LANDRY, Simon, 13001 MARSEILLE (FR); DOUIDI, Abdelmajid, 797703 SINGAPORE (SG)
(74) Mandataire: Cabinet Beaumont

(57) **Abrégé**

La présente description concerne un circuit comprenant :
- une mémoire (704) configurée pour stocker un premier état comprenant N plans comprenant chacun M bandes de L bits, où N, M et L sont des entiers supérieurs ou égaux à 2 ;
- un circuit de contrôle (706) configuré pour commander, à la mémoire (704), la fourniture d'un premier plan permuté du premier état à un circuit cryptographique (702), le premier plan permuté comprenant au moins une première bande comprise dans un premier plan du premier état et une deuxième bande comprise dans un deuxième plan du premier état diffèrent du premier plan,
- le circuit cryptographique (702) configuré pour effectuer une opération cryptographique sur le premier état en générant un état de sortie, la génération de l'état de sortie comprenant l'application d'au moins une transformation sur le premier plan permuté.

## Description

### Domaine technique

La présente description concerne de façon générale les circuits pour la réalisation d'opérations cryptographiques post-quantique.

### Technique antérieure

La famille d'algorithmes de type KECCAK-p opère sur des données binaires, dites « états », à trois dimensions. Ce type d'algorithmes applique une suite d'opérations de confusion et de diffusion sur un état. La suite d'opérations est itérée plusieurs fois, de manière générale 24 fois, afin de propager les transformations. Ces opérations cryptographiques sont par exemple utilisées dans l'exécution de fonction de hachage, telles que par exemple les fonctions de hachage SHA-3 et les fonctions de hachage SHAKE128 et SHAKE256. En particulier, ces fonctions de hachage sont utilisées en cryptographie post-quantique, par exemple dans des schémas de KYBER, connu aussi sous le nom ML-KEM (FIPS 203) dans la norme du NIST, de Dilithium, connu aussi sous le nom ML-DSA (FIPS 204) dans la norme du NIST, etc.

Les états étant des objets comprenant plus de mille bits, l'application d'un algorithme de type KECCAK-p est couteux en temps de calcul et en surface matérielle. En effet, les opérations étant effectuées en partie sur des opérations logiques, un circuit configuré pour effectuer l'algorithme comprend un grand nombre de portes logiques, ce qui est lourd pour l'implémentation matérielle de l'algorithme.

Il existe un besoin d'améliorer l'implémentation matérielle des circuits configurés pour effectuer des opérations cryptographiques sur des données binaires en trois dimensions. En particulier, il existe un besoin de réduction de la surface de tels circuits. Il existe en outre un besoin d'accélérer l'exécution de tels algorithmes.

### Résumé de l'invention

Un mode de réalisation prévoit un circuit comprenant :
- une mémoire configurée pour stocker un premier état comprenant N plans comprenant chacun M bandes de L bits, où N, M et L sont des entiers supérieurs ou égaux à 2 ;
- un circuit de contrôle configuré pour commander, à la mémoire, la fourniture d'un premier plan permuté du premier état à un circuit cryptographique, le premier plan permuté comprenant au moins une première bande comprise dans un premier plan du premier état et une deuxième bande comprise dans un deuxième plan du premier état diffèrent du premier plan,
- le circuit cryptographique configuré pour effectuer une opération cryptographique sur le premier état en générant un état de sortie, la génération de l'état de sortie comprenant l'application d'au moins une transformation sur le premier plan permuté.

Selon un mode de réalisation, le circuit de contrôle est en outre configuré pour commander, de manière itérative, la fourniture de N-1 autres plans permutés du premier état au circuit cryptographique, le circuit cryptographique étant configuré pour générer, itérativement, l'état de sortie en appliquant en outre l'au moins une transformation sur chacun des N-1 autres plans permutés.

Selon un mode de réalisation, le circuit de contrôle est configuré pour commander la fourniture d'un premier plan permuté du premier état au circuit cryptographique, sur la base d'un adressage des bandes du premier état vers le circuit cryptographique.

Selon un mode de réalisation, le premier plan permuté correspond à un plan du premier état sur lequel est appliqué une transformation de permutation.

Selon un mode de réalisation, l'au moins une transformation, appliquée sur le premier plan permuté, comprend :
- la génération d'un premier plan permuté intermédiaire, en effectuant une première transformation comprenant, pour chaque bit du premier plan permuté, l'application d'une opération OU-EXCLUSIF entre le bit, un premier bit de parité et un deuxième bit de parité, les premier et deuxième bits étant compris dans un plan de parité stocké dans le circuit ;
- la génération d'un deuxième plan permuté intermédiaire en effectuant une deuxième transformation comprenant, pour chaque bande du premier plan permuté intermédiaire, un décalage sur la base d'une valeur triangulaire ;
- la génération d'un troisième plan permuté intermédiaire en effectuant une troisième transformation sur chacune des lignes du troisième plan permuté intermédiaire, la troisième transformation étant une transformation non linéaire ; et
- la génération d'un premier plan d'un deuxième état en appliquant une quatrième transformation correspondant à l'ajout d'une valeur entière sur les bits d'au moins une bande du troisième plan permuté intermédiaire.

Selon un mode de réalisation, le circuit cryptographique est en outre configuré pour générer le plan de parité, sur la base du premier état, en appliquant une opération de parité sur chaque colonne du premier état.

Selon un mode de réalisation, l'au moins une transformation appliquée par le circuit cryptographique se compose des première, deuxième, troisième et quatrième transformations.

Selon un mode de réalisation, les entiers N et M sont égaux à 5 et l'entier L est égal à 64.

Selon un mode de réalisation, l'application successive des première, deuxième, troisième et quatrième transformations sur chacun des 5 plans d'un état correspondent respectivement à l'application des transformations ρ, θ, χ et 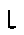 associées aux algorithmes cryptographiques de la famille KECCAK-p.

Selon un mode de réalisation, le premier plan permuté correspond à un premier plan de l'état auquel est appliqué la transformation π associée aux algorithmes cryptographiques de la famille KECCAK-p.

Selon un mode de réalisation, chacune des x-ème bandes de chacun des y-ème plans du premier état, x et y étant des valeurs entières entre 0 et 4 et définissant les coordonnée d'une bande dans le premier état, sont chacune associée à une valeur d'indice égale à x+5y, le circuit de contrôle étant configuré pour permuter les bandes du premier état en adressant la bande d'indice (X+3Y)mod 5 +5X pour le traitement de la Y-ème bande d'un X-eme plan permuté, les valeurs X et Y étant des valeur entières entre 0 et 4.

Selon un mode de réalisation, la mémoire, le circuit de contrôle et le circuit cryptographique sont configurés pour générer l'état de sortie en itérant une pluralité de fois, par exemple 24 fois, l'au moins une transformation sur les N plans de l'état compris dans la mémoire.

Selon un mode de réalisation, le circuit ci-dessus est configuré en outre pour générer une valeur de hachage sur 256 ou 384 ou 512 ou 1024 ou 1536 bits sur la base de l'état de sortie.

Un mode de réalisation prévoit un procédé comprenant :
- la fourniture d'un premier plan permuté d'un premier état, stocké dans une mémoire à un circuit cryptographique, le premier état comprenant N plans comprenant chacun M bandes de L bits, où N, M et L sont des entiers supérieurs ou égaux à 2 et le premier plan permuté comprenant au moins une première bande comprise dans un premier plan du premier état et une deuxième bande comprise dans un deuxième plan du premier état diffèrent du premier plan;
- effectuer une opération cryptographique sur le premier état par la génération d'un état de sortie, par le circuit cryptographique, la génération comprenant l'application d'au moins une transformation sur le premier plan permuté.

Selon un mode de réalisation, le procédé ci-dessus comprend en outre la génération d'une valeur de hachage sur 128 ou 256 ou 384 ou 512 bits, sur la base de l'état de sortie.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente de façon schématique une donnée binaire en trois dimensions ;
la figure 2 est un organigramme représentant des étapes réalisées lors de l'exécution d'un algorithme de hachage de la famille KECCAK-p ;
la figure 3 est un schéma illustrant les transformations appliquées sur un état par un algorithme de la famille KECCAK-p ;
la figure 4 est un schéma illustrant l'application d'une première transformation sur un plan d'un état, selon un mode de réalisation de la présente description ;
la figure 5 est un schéma illustrant l'application d'une deuxième transformation sur un plan d'un état, selon un mode de réalisation de la présente description ;
la figure 6 est un schéma illustrant l'application d'une troisième transformation sur les plans d'un état, selon un mode de réalisation de la présente description ;
la figure 7 est un schéma par blocs représentant un circuit configuré pour l'application d'un algorithme de la famille KECCAK-p, selon un mode de réalisation de la présente description ; et
la figure 8 est un organigramme représentant des étapes dans l'application d'une fonction de hachage de la famille KECCAK-p, selon un mode de réalisation de la présente description.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les transformations linéaires et non linéaires appliquées sur un état pour la mise en œuvre d'un algorithme cryptographique de la famille KECCAK-p sont connus par la personne du métier et ne sont pas décrits en détail.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % ou à 10° près, de préférence à 5 % ou à 5° près.

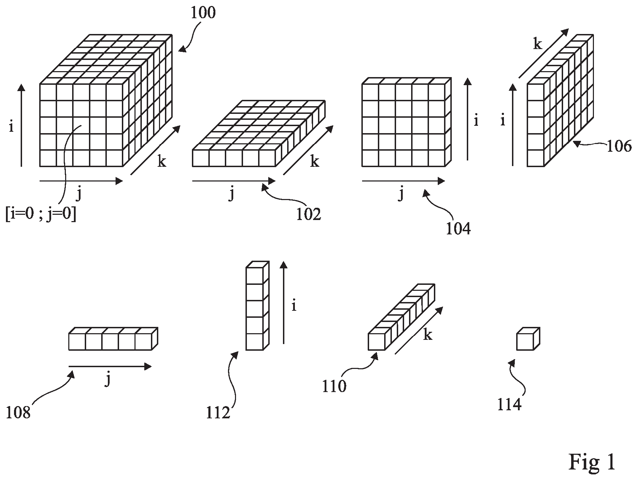

La figure 1 représente de façon schématique une donnée binaire en trois dimensions, dite « état », 100. L'état 100 se décompose en trois objets binaires en deux dimensions. En particulier, l'état 100 se décompose en des plans 102, des tranches (en anglais « slice ») 104 et des couches (en anglais « sheet ») 106. Chacun de ces objets binaires à deux dimensions se décompose en objet à une dimension. En particulier, les plans 102 se décomposent en des lignes 108 ou en des bandes (en anglais « lane ») 110. Les tranches 104 se décomposent en des lignes 108 ou en des colonnes 112 et les couches 106 se décomposent en des colonnes 112 ou en des bandes 110. Chacun de ses objets à deux dimensions est composé d'une pluralité de bits 114.

A titre d'exemple, un état comprend un nombre N de plans, un nombre M de tranches et un nombre L de couches, les nombres N, M et L étant des entiers supérieurs ou égaux à 2.

A titre d'exemple, les algorithmes de la famille KECCAK-p sont configurés pour être appliqués sur des états de 1600 bits. En particulier, l'état 100 comprend par exemple 5 plans 102 de 320 bits, chaque plan 102 comprenant soit 5 bandes de 64 bits, soit 64 lignes 108 de 5 bits. L'état 100 se représente en outre par 64 tranches 106 de 25 bits, chaque tranche 104 comprenant 5 lignes de 5 bits, ou 5 colonnes de 5 bits. De la même manière, l'état 100 se représente aussi par 5 couches 106 de 320 bits, chaque couche 106 comprenant 64 colonnes 112 de bits, ou 5 bandes 110 de 64 bits. En d'autres termes, l'état 100 se représente par exemple par un cube de taille 5x5x64 bits.

L'état 100 se représente en outre par un tableau binaire tridimensionnel A (non illustré dans les figures), par exemple de taille 5x5x64, chaque élément A[i,j,k], 0 ≤ *i,j* ≤ 4 et 0 ≤ *k* ≤ 63, du tableau représentant l'état du bit à la position [i,j,k] dans l'état. A titre d'exemple, A[:,j,k], 0 ≤ *j* ≤ 4 et 0 ≤ *k* ≤ 63, représente la colonne de l'état 100 comprenant les bits A[0,j,k] à A[4,j,k]. A titre d'exemple, A[i, : , k], 0 ≤ *i* ≤ 4 et 0 ≤ *k* ≤ 63, représente la ligne comprenant les bits A[i,0,k] à A[i,4,k], 0 ≤ *i,j* ≤ 4 et 0 ≤*k* ≤ 63. A titre d'exemple, A[i,j,:], 0 ≤ *i,j* ≤ 4, représente la bande comprenant les bits A[i,j,0] à A[i,j,63]. De manière similaire, A[:,:,*k*], 0 ≤ *k* ≤ 63 , représente la tranche comprenant les bits A[0,0,k] à A[4,4,k]. De même A[:,j,:], et A[i,:,:], 0 ≤ *i,j* ≤ 4 et 0 ≤ *k* ≤ 63, représentent respectivement la couche comprenant les bits A[0,j,0] à A[4,j,63] et le plan comprenant les bits A[i,0,0] à A[i,0,63]. En particulier, où la position [0,0,k] ([i=0,j=0]) est la position du bit au centre de la tranche A[:,:,k].

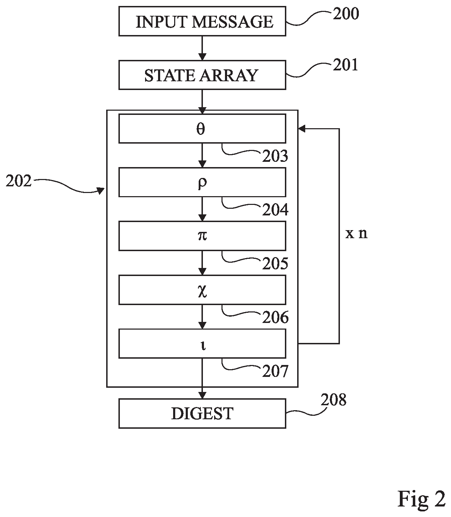

La figure 2 est un organigramme représentant des étapes réalisées lors de l'exécution d'un algorithme de hachage de la famille KECCAK-p. En particulier, l'algorithme s'effectue itérativement sur des états tels que décrits en relation avec la figure 1.

Dans une étape 200 (INPUT MESSAGE), une donnée d'entrée est fournie à un circuit configuré pour appliquer un algorithme de la famille KECCAK-p.

La donnée d'entrée est, par exemple, convertie en un état d'entrée de taille 5x5x64 dans une étape 201 (STATE ARRAY). A titre d'exemple, le (64(5i+j)+k)^{ième} bit de la donnée d'entrée est envoyé à la position [i,j,k] de l'état d'entrée, le calcul étant effectué modulo 5 pour les positions sur les lignes et les colonnes et modulo 64 pour les bandes.

Dans une étape 202, une pluralité de transformations linéaires et une transformation non linéaire sont appliquées à l'état d'entrée. En particulier, l'étape 202 comprend l'application d'une suite de cinq transformations 203 à 207. L'étape 202 est itérée une pluralité de fois (x n), par exemple 24 fois, sur les états résultants de chaque application de la suite de transformations. Le nombre d'itérations correspond au nombre de tour dans l'algorithme de la famille KECCAK-p. En particulier, les transformations 203 (θ), 204 (ρ), 205 (π) et 207 ( 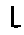 ) sont des transformations de diffusions de l'information. Ces transformations sont des transformations linéaires. La transformation 206 (χ) est une transformation de confusion. En particulier, la transformation 206 est une transformation non linéaire.

Suite à la pluralité d'itérations de l'étape 202, un état de sortie est généré. En particulier, l'état de sortie est de même taille que l'état d'entrée de l'étape 202. A titre d'exemple, l'état de sortie est de taille 5x5x64.

Dans une étape 208 (DIGEST) une valeur de hachage est générée à partir de l'état de sortie. A titre d'exemple, la valeur de hachage est une donnée de taille 224, 256, 384 ou 512 bits, selon la fonction de hachage implémentée. A titre d'exemple, si la fonction de hachage est une fonction de type SHA-3, la valeur de hachage est une valeur sur 224, 256, 384 ou 512 bits. Dans l'exemple où la fonction de hachage est la fonction SHAKE128, respectivement la fonction SHAKE256, la valeur de hachage est variable et dépend des besoins l'algorithme et/ou de l'utilisateur. A titre d'exemple, la fonction de hachage est la fonction SHAKE128 ou la fonction SHAKE256 utilisées dans les algorithmes ML-KEM et ML-DSA. Par exemple, pour ML-KEM, la taille de la valeur de hachage de SHAKE256 est de 1024 bits ou de 1536 bits. A chaque exécution de la fonction SHAKE256, la valeur de hachage est par exemple de 1344 bits. A titre d'exemple, pour générer une valeur de hachage sur 1024 bits, la fonction SHAKE256 est exécutée une seule fois. Dans un autre exemple, pour générer une valeur de hachage sur 1536 bits, la fonction SHA256 est exécutée deux fois et la valeur sur 1536 bits est obtenue sur la base des deux résultats. De manière générale, dans le cadre de l'algorithme ML-KEM, la fonction SHAKE256 intervient et est exécuté autant de fois que nécessaire pour construire une valeur de hachage de taille arbitraire..

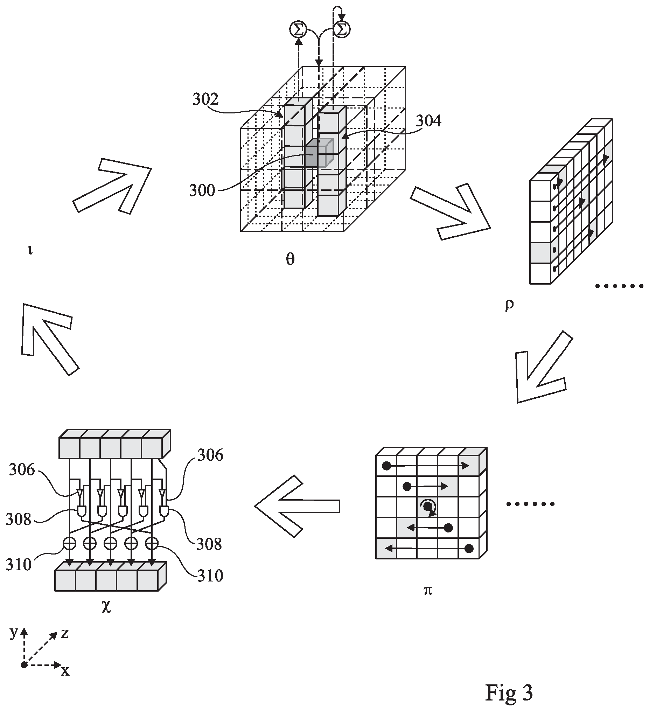

La figure 3 est un schéma illustrant les transformations appliquées sur un état par un algorithme de la famille KECCAK-p. En particulier, la figure 3 illustre l'application de la suite des transformations 203 à 207 de la figure 2 sur un état. Les cinq transformations 203 à 207 sont les transformations standard de l'algorithmes KECCAK et sont connues par la personne du métier.

La transformation 203, communément appelée transformation θ, est une transformation linéaire de diffusion. Pour chaque bit A[i,j,k] 300, 0 ≤ *i*,*j* ≤ 4 et 0 ≤ *k* ≤ 63, la transformation θ comprend le calcul de la parité des colonnes A[:, (j-1)mod 5 ;k] 302 et A[:, (j+1)mod 5 ; (k-1)mod 5] 304. La transformation θ comprend en outre l'application de l'opération OU-EXCLUSIF (XOR) entre la parité de la colonne A[:,(j-1)mod 5 ;k] et la parité de la colonne A[:,(j+1)mod 5 ;(k-1)mod 64]. En d'autres termes, l'application de la transformation θ sur un état A résulte en un état *A_{θ}* où A_{θ}[i,j,k] = *A*[*i,j,k*] ⊕ *parite*(A[:, (j - 1)mod5 ; k]) ⊕ parite(A[: , (j + 1)mod5 ; (k - 1)mod5]), et où *parite* est la fonction parité.

La transformation 204, communément appelée transformation ρ, est ensuite appliquée à l'état *A_{θ}.* En particulier, la transformation ρ est une transformation de dispersion circulaire sur chaque couche. Chaque bit sur une bande d'une tranche de l'état est décalé, modulo 64, par une valeur de décalage. A titre d'exemple, les valeurs de décalage sont des nombres triangulaires. En particulier, la valeur de décalage appliquée à une bande A[i,j,:] est différente des valeurs de décalage appliquées à chaque autres bandes A[i',j,:], où *i* ≠ *i'*. Le décalage sur la bande A[i,j,:] est, en outre, différent du décalage effectué sur les bandes A[i,j',:], où *j ≠ j'.* En particulier, la transformation ρ sur un état A résulte en un état *A_{ρ},* où *A_{ρ}*[i,j,k]=A[i,j,(k-(t+1)(t+2)/2)mod 64)], où t correspond au numéro du tour de l'algorithme de la famille KECCAK-p, par exemple compris entre 0 et 23. En particulier, le décalage appliqué sur chaque bande dépend de sa position dans l'état. Le décalage appliqué est déterminé par le tableau ci-dessous, où la position (i=0,j=0) correspond au centre d'une tranche.

**[Table 1]**

| | j=3 | j=4 | j=0 | j=1 | j=2 |
|---|---|---|---|---|---|
| i=2 | 153 | 231 | 3 | 10 | 171 |
| i=1 | 55 | 276 | 36 | 300 | 6 |
| i=0 | 28 | 91 | 0 | 1 | 190 |
| i=4 | 120 | 78 | 210 | 66 | 253 |
| i=3 | 21 | 136 | 105 | 45 | 15 |

La transformation 205, communément appelée transformation π, est une permutation des éléments sur une même tranche. En particulier, la permutation π sur un état A résulte en un état *A*_{π} où *A*_{π}[(3*i+2j) mod 5,i,k]=A[i,j,k], 0 ≤ *i,j* ≤ 4 et 0 ≤ *k* ≤ 63, où la position [0,0,k] est l'élément au centre d'une tranche.

La transformation 206, communément appelée transformation χ, est une transformation non linéaire correspondant à une diffusion. La transformation χ combine les éléments d'une ligne en utilisant des opérations logiques ET (AND), NON (NOT) et OU-EXCUSIF (XOR) entre deux bits. En particulier, la permutation χ sur un état A résulte en un état *A*_{χ}, où *A*_{χ} [i,j,k]= A[i,j,k] ⊕ ((NOT A[i, (j+1)mod 5,k]) AND A[i, (j+2) mod 5,k]). Par exemple, l'implémentation matériel de la transformation χ s'effectue, pour chaque bit de chaque ligne, par l'intermédiaire d'une porte NOT 306 lisant la valeur du bit en colonne (j+1)mod 5 de cette même ligne, d'une porte AND 308 entre la sortie de la porte 306 et de la valeur du bit en colonne (j+2) mod 5 de cette même ligne et une porte XOR 310 entre la sortie de la porte 308 et le bit sur la colonne j. Le coût matériel pour l'implémentation de la transformation χ sur un état entier est alors relativement élevé.

La transformation 207, communément appelée transformation 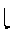 , est une transformation linéaire correspondant à une addition avec une valeur arrondie. En particulier, les bits de la valeur arrondie diffèrent entre chaque itération de l'algorithme de KECCAK-p. De plus, à chaque itération, la valeur d'arrondie est appliquée sur un unique plan de l'état. A titre d'exemple, la valeur d'arrondie est basée sur une valeur comprise dans un registre à décalage à rétroaction linéaire. L'implémentation matérielle de la fonction 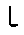 est basée sur une pluralité de portes XOR et sur au moins un registre à décalage à rétroaction linéaire.

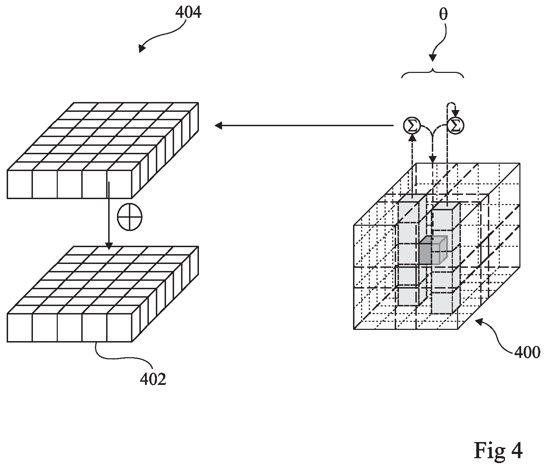

La figure 4 est un schéma illustrant l'application de la transformation θ sur un plan 402 d'un état A 400, selon un mode de réalisation de la présente description. En particulier, sur chaque bit de l'état est appliqué une opération XOR avec le résultat d'une opération XOR entre les deux colonnes voisines de l'état.

La transformation θ étant effectuée la base des bits de parité de colonnes voisines, un mode de réalisation comprend le calcul d'un plan de parité 404 comprenant les valeurs de parité de chacune des colonnes de l'état 400. A titre d'exemple, le plan de parité 404 comprend 5*64=320 valeurs de parité. En particulier, la valeur en position [i=k1,j=j1] du plan de parité 404 est égale à la valeur de parité de la colonne A[:;j1,k1].

Selon un mode de réalisation, l'application de la transformation θ s'effectue plan par plan de l'état 400. A titre d'exemple, pour le plan 402 de l'état 400, la transformation θ est effectuée en appliquant les opérations XOR, telles que décrites en relation avec la figure 3, entre chaque bit du plan 402 et les valeurs de parité du plan 404. En particulier, pour un plan donné A[i,j,:], l'opération XOR s'effectue entre le bit A[i,j,k1] et les valeurs en positions [(j-1) mod 5,k1) et [(j+1) mod 5, (k1-1)mod 5] du plan 404. L'opération est ensuite répétée sur chaque plan, par exemple sur les 5 plans, de l'état 400, sur la base des mêmes valeurs de parité du plan 404.

La transformation θ est appliquée sur les 5 plans de l'état 400. Le résultat de cette transformation correspond alors à l'application de cinq opérations XOR entre le plan de parité 404 et les cinq plans de l'état 400.

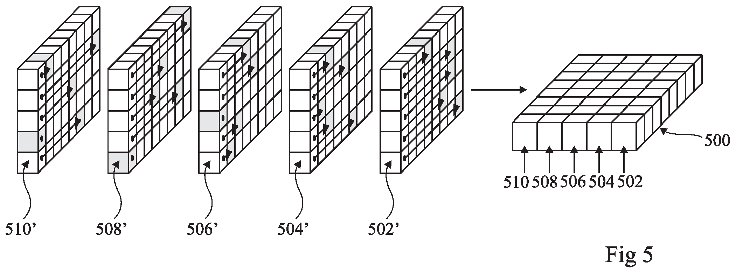

La figure 5 est un schéma illustrant l'application de la transformation ρ sur un plan 500 d'un état, selon un mode de réalisation de la présente description. A titre d'exemple, le plan 502 est le plan A[3, :, :].

A titre d'exemple, pour une bande 502 du plan 500, par exemple la bande A[3, 2, :], un décalage 502' est appliqué, par exemple une valeur de décalage de 15 est appliquée. La valeur de chaque bit A[3,2,k] est alors décalée au bit en position A[3,2,(k+15)mod 64]. De même, pour une bande 504 du plan 500, par exemple la bande A[3,1, :], un décalage 504' est appliqué, par exemple une valeur de décalage de 45 est appliquée. La valeur de chaque bit A[3,1,k] est alors décalée au bit en position A[3,1,(k+45)mod 64]. De même, pour une bande 506 du plan 500, par exemple la bande A[3, 0, :], un décalage 506' est appliqué, par exemple une valeur de décalage de 105 est appliquée. La valeur de chaque bit A[3,0,k] est alors décalée au bit en position A[3,0,(k+105)mod 64]. De même, pour une bande 508 du plan 500, par exemple la bande A[3,4, :], un décalage 508' est appliqué, par exemple une valeur de décalage de 136 est appliquée. La valeur de chaque bit A[3,4,k] est alors décalée au bit en position A[3,4, (k+136)mod 64] . De même, pour une bande 510 du plan 500, par exemple la bande A[3,1, :], un décalage 510' est appliqué, par exemple une valeur de décalage de 21 est appliquée. La valeur de chaque bit A[3,1,k] est alors décalée au bit en position A[3,1,(k+21)mod 64]. La transformation ρ s'applique ainsi, plan par plan d'un état, les valeurs de décalage s'appliquant pour chaque bande de chaque plan étant, par exemple, définies par le tableau [Table 1] introduit en relation avec la figure 3.

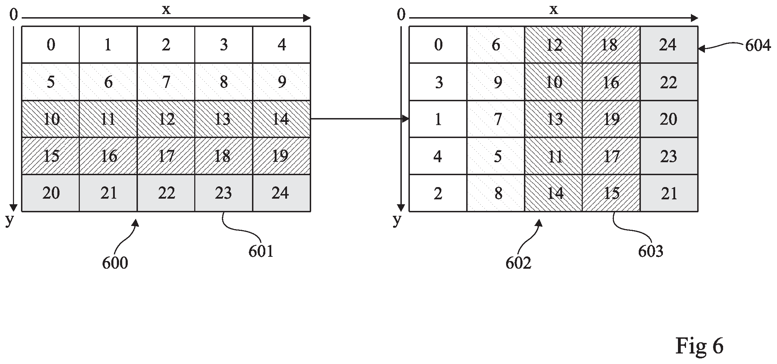

La figure 6 est un schéma illustrant l'application de la transformation π sur les plans d'un état 600, selon un mode de réalisation de la présente description. A titre d'exemple, l'état 600 est représenté sous forme d'un tableau 601, chaque ligne représentant un plan de l'état 600 et chaque case représentant une bande du plan de l'état 600. Dans cette figure, chaque case a pour coordonnées des coordonnée (x,y) où la case (0,0) est la case en haut à gauche du tableau 601 et la case (4,4) est la case en bas à droite du tableau 601. Ainsi, la première ligne du tableau 601 représente par exemple le plan A[2, :, :] de l'état 100 tel que décrit en relation avec la figure 1. A titre d'exemple, chaque bande de chaque plan est associée à une valeur d'indice I entre 0 et 24. En particulier, chaque bande en position (x,y) du tableau 601 est associée à la valeur d'indice *I_{x,y}* égale à x+5y. La transformation π, telle que décrite en relation avec la figure 3 et lorsqu'elle est appliquée sur l'ensemble des plans de l'état 600, résulte en un nouvel arrangement des bandes au sein des plans. En particulier, un état permuté 602, représenté par un tableau 603, représente l'arrangement des bandes au sein des plans de l'état permuté 602 suite à l'application de la permutation π sur l'état 600. Chaque bande de l'état 602 a pour coordonnées des coordonnées (X,Y), où la case (0,0) est la case en haut à gauche du tableau 603 et la case (4,4) est la case en bas à droite du tableau 603. En particulier, la permutation π est telle que la bande associée à la valeur *I_{x,y}* est envoyée en position [X=y, Y=(2x+3y)mod 5] du tableau 603. Ainsi, chaque case de coordonnées (X,Y) du tableau 603 représente la bande associée à la valeur [(X+3Y)mod 5] +5X. Ainsi, les 5 plans de l'état permuté 602 correspondent à un réarrangement des 25 bandes de l'état 600. Par exemple, un nouveau plan 604 de l'état 602 est composé des bandes associées aux valeurs entières 0, 6, 12, 18 et 24.

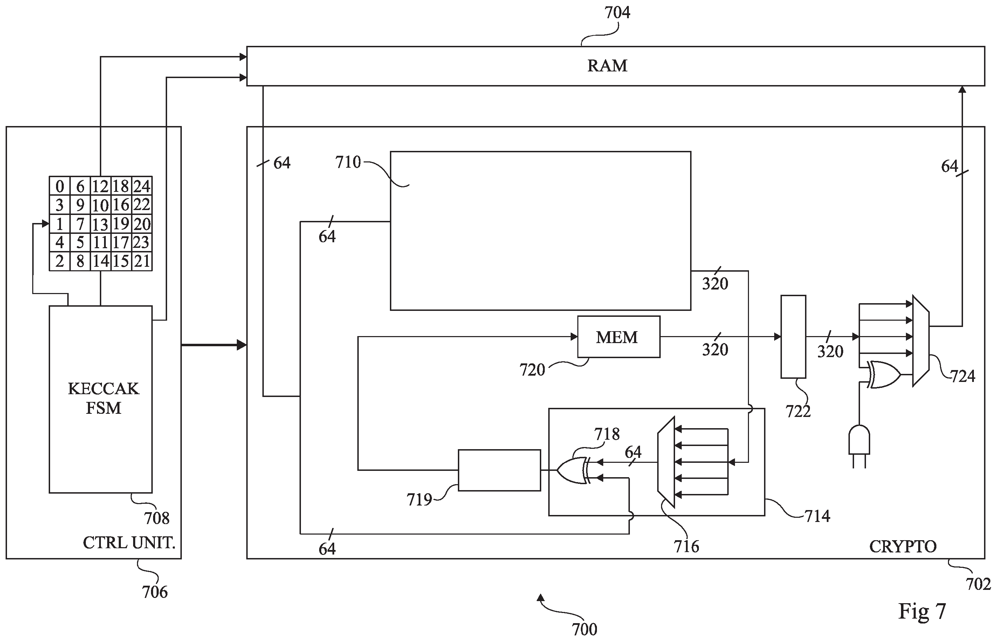

La figure 7 est un schéma par blocs représentant un circuit 700 configuré pour l'application d'un algorithme de la famille KECCAK-p, selon un mode de réalisation de la présente description. En particulier, le circuit 700 est configuré pour appliquer les transformations θ, ρ, χ et 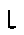 sur un état, plan par plan. En particulier, le circuit 700 est configuré pour appliquer les transformations θ, ρ, χ et 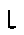 sur chaque plan d'un état ayant déjà subit la transformation π.

Selon un mode de réalisation, la permutation π est appliquée à un état en amont de l'application des autres transformations. En particulier, l'application de la transformation π s'effectue sur l'adressage des bandes de chaque plan vers un circuit cryptographique 702 (CRYPTO) du circuit 700.

Selon un mode de réalisation, le circuit 700 comprend en outre une mémoire 704 (RAM). A titre d'exemple, la mémoire 704 est une mémoire volatile, par exemple une mémoire à accès aléatoire (en anglais « Random Acces Memory » - RAM). Le circuit 700 comprend en outre un circuit de contrôle 706 (CTRL UNIT).

Selon un mode de réalisation, la mémoire 704 est configurée pour recevoir des états sur lesquels un algorithme de type KECCAK-p est à appliquer.

Selon un mode de réalisation, l'unité de contrôle 706 est configurée pour commander, à la mémoire 704, la fourniture au circuit cryptographique 702 des plans ayant déjà subit la permutation π. En particulier, l'unité de contrôle 706 est configurée pour commander, à la mémoire 704, la fourniture des plans de l'état 602 décrits en relation avec la figure 6. L'unité de contrôle 706 est ainsi configurée pour modifier, par exemple par l'intermédiaire d'une machine à états finis 708 (KECCAK FSM), l'adressage de chaque bande d'un plan, afin que chaque plan fourni au circuit cryptographique 702 ait déjà subit la transformation π, telle que décrit en relation avec la figure 6. Les transformations θ et ρ sont ainsi appliqués sur des plans d'un état ayant déjà subit la permutation π. A titre d'exemple, la fourniture d'un premier plan permuté s'effectue via l'adressage des bandes d'indice 0, 6, 12, 18 et 24. Par exemple, la fourniture d'un Y-ème plan permuté, Y étant un entier entre 0 et 4, s'effectue via l'adressage des bandes d'indice [(X+3Y)mod5] +5X, *X* ∈ {0,...,4}.

Le circuit cryptographique 702 comprend un circuit de parité 710 configuré pour calculer les bits de parité de l'état stocké dans la mémoire 704, tel que décrit en relation avec la figure 4. En particulier, le circuit de parité 710 reçoit en entrée l'état permuté, par exemple l'état 604. A partir d'un état permuté, le circuit de parité 710 est par exemple configuré pour stocker les bits de parité, par exemple les 320 bits de parité. En particulier, le calcul du plan de parité de l'état permuté s'effectue sur la base de l'état non permuté stocké dans la mémoire 704, via l'adressage des bandes, par le circuit de contrôle 706, vers le circuit cryptographique 702. Le circuit 710 est en outre configuré pour appliquer l'opération XOR entre les bits de parité des colonnes voisines.

Le circuit cryptographique 702 comprend en outre un circuit logique 714 configuré pour effectuer l'opération θ sur chaque bande du plan permuté fourni par la mémoire 704, sur la base des valeurs de parité calculées par le circuit 710. Le circuit logique 714 comprend par exemple un multiplexeur 716. Le multiplexeur 716 est configuré pour recevoir les 5 bandes du plan de parité. Le circuit logique 714 comprend en outre un circuit 718 configuré pour effectuer l'opération XOR entre chaque bit du plan permuté et les bits de parité. A titre d'exemple, le circuit 718 est configuré pour opérer bande par bande et comprend, par exemple, 64 portes logiques de type XOR. En particulier, le circuit 718 génère un premier plan permuté intermédiaire.

Le circuit cryptographique 702 comprend en outre un circuit de décalage 719 configuré pour effectuer la transformation ρ, telle que décrite en relation avec la figure 5, sur chaque bande générée par le circuit logique 714. Le circuit de décalage 718 est configuré pour stocker chaque bande générée dans une mémoire volatile 720 (MEM). A titre d'exemple, la mémoire 720 comprend autant de registres que de plans composant l'état, par exemple 5 registres. Chaque registre est configuré pour stocker une bande de, par exemple, 64 bits. Suite au traitement des 5 bandes du premier plan permuté intermédiaire par le circuit de décalage 718, la mémoire 720 stocke un deuxième plan permuté intermédiaire.

Selon un mode de réalisation, les circuits 714 et 718 opèrent de manière itérative sur chaque bande d'un plan permuté. Lorsque toutes les bandes d'un même plan permuté sont traitées, la mémoire 720 fournit son contenu, par exemple, les 64 bits contenus par chacun des 5 registres, à un circuit de calcul 722. A titre d'exemple, les 320 bits fournis par la mémoire 720 correspondent à l'application successive des transformations θ et ρ sur un plan permuté.

Le circuit 722 est configuré pour effectuer la transformation χ sur la donnée en sortie de la mémoire 720. A titre d'exemple, le circuit 722 comprend une pluralité de portes logiques de type AND, NOT et XOR. En particulier, le circuit 722 est configuré pour générer un troisième plan permuté intermédiaire en appliquant la transformation χ telle que décrite en relation avec la figure 3, sur chaque ligne du deuxième plan permuté intermédiaire.

Le circuit cryptographique 702 comprend en outre un multiplexeur 724 configuré pour effectuer la transformation 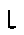 sur la sortie générée par le circuit 722. Le multiplexeur 726 est configuré pour recevoir autant d'entrée que de bandes composant un plan de l'état, par exemple 5 entrées. A titre d'exemple, une des entrées du multiplexeur 726 correspond à une bande du plan généré par le circuit 722 auquel est ajouté une valeur entière afin de réaliser la transformation 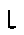 . Les autres entrées du multiplexeur 726 correspondent aux autres bandes du plan généré par le circuit 722. Le multiplexeur 724 est configuré pour générer un plan de sortie en ajoutant une valeur d'arrondi à une bande du troisième plan permuté intermédiaire. A titre d'exemple, la mémoire 704 est dimensionnée en mots de 64 bits, correspondant à la taille des bandes. Les opérations de lecture et d'écriture dans la mémoire 704 se font mot par mot de 64 bits. Une fois le plan de sortie est calculé et est prêt pour être stocké dans la mémoire 704, le multiplexeur 724 est configuré pour sélectionner, dans l'ordre, bande par bande du plan de sortie dans le bon ordre, et pour stocker les bandes une par une dans la mémoire 704.

Le circuit 700 itère les transformations sur chacun des plans d'un état. Un tour de l'algorithme de KECCAK-p correspond à l'application des transformations sur chacun des plans. En particulier, une fois que le circuit 700 a traité l'ensemble des plans d'un état d'entrée, la mémoire 704 comprend un premier état modifié composé des plans de sortie. Ce premier état modifié sert alors d'état d'entrée au circuit cryptographique 702 afin que celui-ci effectue une nouvelle itération de l'algorithme de la famille KECCAK-p.

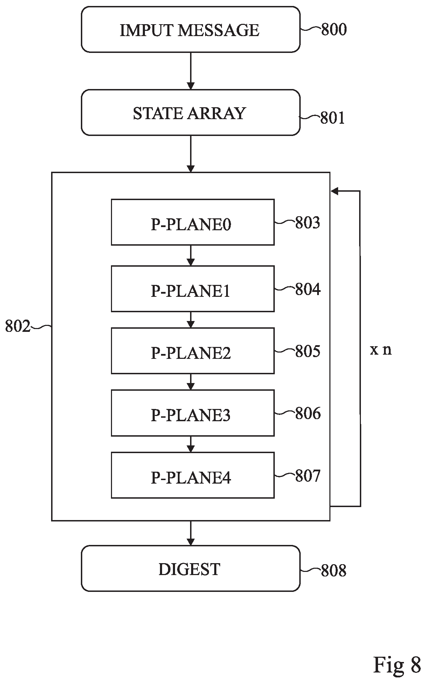

La figure 8 est un organigramme représentant des étapes dans l'application d'une fonction de hachage de la famille KECCAK-p, selon un mode de réalisation de la présente description. En particulier, la mise en œuvre matérielle de l'application d'une fonction de hachage de la famille KECCAK-p est réalisée par le circuit 700.

Dans une étape 800 (INPUT MESSAGE), similaire à l'étape 200 de la figure 2, une donnée d'entrée est fournie au circuit 700. La donnée d'entrée est, par exemple, convertie en un état d'entrée de taille 5x5x64 dans une étape 801 (STATE ARRAY), similaire à l'étape 201. L'état d'entrée est par exemple stocké dans la mémoire 704.

Dans une étape 802, le circuit 700 génère un état de sortie en appliquant les transformations décrites en relation avec les figures 4, 5, 6 et 7. En particulier, l'étape 802 comprend 5 étapes 803 à 807, chacune de ces étapes correspondant au traitement d'un plan permuté de l'état compris dans la mémoire 704 par le circuit cryptographique 702.

L'étape 803 (P-PLANE0) comprend l'adressage, par le circuit de contrôle 706, des bandes composant un premier plan permuté. L'étape 803 comprend en outre le traitement, par le circuit cryptographique 702 de chaque bande du premier plan permuté. En particulier, l'adressage des bandes composant le premier plan permuté vers le circuit 702 est effectué par le circuit de contrôle 706 sur la base de l'état compris dans la mémoire 704. En particulier, l'état compris dans la mémoire 704 n'est pas permuté, et correspond par exemple à l'état d'entrée. Ainsi, la transformation π est entièrement mise en œuvre par l'intermédiaire du circuit de contrôle 706 sur l'adressage des bandes vers le circuits cryptographique 702. De même, l'étape 804 (P-PLANE1), respectivement les étapes 805 (P-PLANE2), 806 (P-PLANE3) et 807 (P-PLANE4), comprend l'adressage, par le circuit de contrôle 706, des bandes composant un deuxième plan permuté, respectivement des troisième, quatrième et cinquième, plans permutés de l'état stocké dans la mémoire 704.

Suite à une première itération des étapes 803 à 807, un nouvel état, correspondant à l'état obtenu suite à l'application des transformations θ, ρ, π, χ et 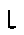 sur l'état d'entrée, est stocké dans la mémoire 704.

L'étape 802 est, par exemple, itérée une pluralité de fois (), par exemple 24 fois, sur l'état courant stocké dans la mémoire 704. En particulier, le plan de parité est recalculé à chaque itération de l'étape 802, sur la base de l'état courant stocké dans la mémoire 704.

Suite à la pluralité d'itérations de l'étape 802, un état de sortie est généré. En particulier, l'état de sortie est de même taille que l'état d'entrée de l'étape 802. A titre d'exemple, l'état de sortie est de taille 5x5x64.

Dans une étape 808 (DIGEST), similaire à l'étape 208, une valeur de hachage est générée à partir de l'état de sortie. A titre d'exemple, la valeur de hachage est une donnée de taille 224, 256, 384 ou 512 bits, selon la fonction de hachage implémentée. A titre d'exemple, si la fonction de hachage est une fonction de type SHA-3, la valeur de hachage est une valeur sur 224, 256, 384 ou 512 bits. Dans l'exemple où la fonction de hachage est la fonction SHAKE128, respectivement la fonction SHAKE256, la valeur de hachage est une valeur de taille variable, dépendant des besoins de l'algorithme et/ou de l'utilisateur.

Un avantage des modes de réalisation décrit est que le traitement d'un état s'effectue plan par plan, et non pas directement dans sa totalité. Ainsi, la surface du circuit 700 est réduite.

Un autre avantage des modes de réalisation décrit est que la transformation de permutation π s'effectue sur l'adressage des bandes de chaque plan. La mémoire 702 stocke alors un état non permuté et la permutation s'effectue via l'adressage des bandes vers le circuit cryptographique 702. Ainsi, la surface du circuit cryptographique 702 est réduite car elle ne comprend pas de composants configurés pour effectuer cette transformation.

Un autre avantage apporté par l'implémentation de la transformation π via l'adressage des bandes est que le temps de calcul pour effectuer les transformations est réduit.

Un autre avantage apporté par les modes de réalisation décrit est que le circuit 700 est résistant aux attaques par canaux cachés. En effet, le traitement des états plan par plan, la mise en œuvre de la transformation π via l'adressage des bandes, et l'application des transformations ρ et θ sur les plans déjà permutés sont des contremesures aux attaques par canaux cachés.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, la tailles des états peut varier. Bien que l'exemple d'états de tailles 5x5x6 soit principalement décrit, la personne du métier saura adapter les modes de réalisation de la présente description à des états de tailles différentes. De même, les transformations réalisées par le circuit cryptographique 702 peuvent variées. La forme de la permutation π peut également varier, la personne du métier saura adapter l'adressage des bandes de chaque plan permuté selon la permutation à effectuer.

Enfin, la mise en œuvre pratique des modes de réalisation et variantes décrits est à la portée de la personne du métier à partir des indications fonctionnelles données ci-dessus.

## Revendications

1. Circuit (700) comprenant :
- une mémoire (704) configurée pour stocker un premier état comprenant N plans comprenant chacun M bandes de L bits, où N, M et L sont des entiers supérieurs ou égaux à 2 ;
- un circuit de contrôle (706) configuré pour commander, à la mémoire (704), la fourniture d'un premier plan permuté du premier état à un circuit cryptographique (702), le premier plan permuté comprenant au moins une première bande comprise dans un premier plan du premier état et une deuxième bande comprise dans un deuxième plan du premier état diffèrent du premier plan,
- le circuit cryptographique (702) configuré pour effectuer une opération cryptographique sur le premier état en générant un état de sortie, la génération de l'état de sortie comprenant l'application d'au moins une transformation sur le premier plan permuté.

2. Circuit (700) selon la revendication 1, dans lequel le circuit de contrôle (706) est en outre configuré pour commander, de manière itérative, la fourniture de N-1 autres plans permutés du premier état au circuit cryptographique (702), le circuit cryptographique étant configuré pour générer, itérativement, l'état de sortie en appliquant en outre l'au moins une transformation sur chacun des N-1 autres plans permutés.

3. Circuit (700) selon la revendication 1 ou 2, dans lequel le circuit de contrôle (706) est configuré pour commander la fourniture d'un premier plan permuté du premier état au circuit cryptographique (702), sur la base d'un adressage des bandes du premier état vers le circuit cryptographique.

4. Circuit (700) selon l'une quelconque des revendication 1 à 3, dans lequel le premier plan permuté correspond à un plan du premier état sur lequel a été appliqué une transformation de permutation.

5. Circuit (700) selon l'une quelconque des revendications 1 à 4, dans lequel l'au moins une transformation, appliquée sur le premier plan permuté, comprend :
- la génération d'un premier plan permuté intermédiaire, en effectuant une première transformation comprenant, pour chaque bit du premier plan permuté, l'application d'une opération OU-EXCLUSIF (XOR) entre le bit, un premier bit de parité et un deuxième bit de parité, les premier et deuxième bits étant compris dans un plan de parité stocké dans le circuit (700) ;
- la génération d'un deuxième plan permuté intermédiaire en effectuant une deuxième transformation comprenant, pour chaque bande du premier plan permuté intermédiaire, un décalage sur la base d'une valeur triangulaire ;
- la génération d'un troisième plan permuté intermédiaire en effectuant une troisième transformation sur chacune des lignes du troisième plan permuté intermédiaire, la troisième transformation étant une transformation non linéaire ; et
- la génération d'un premier plan d'un deuxième état en appliquant une quatrième transformation correspondant à l'ajout d'une valeur entière sur les bits d'au moins une bande du troisième plan permuté intermédiaire.

6. Circuit (700) selon la revendication 5, dans lequel le circuit cryptographique (702) est en outre configuré pour générer le plan de parité, sur la base du premier état, en appliquant une opération de parité sur chaque colonne du premier état.

7. Circuit (700) selon la revendication 5 ou 6, dans lequel l'au moins une transformation appliquée par le circuit cryptographique (702) se compose des première, deuxième, troisième et quatrième transformations.

8. Circuit (700) selon l'une quelconque des revendications 5 à 7, dans lequel les entiers N et M sont égaux à 5 et l'entier L est égal à 64.

9. Circuit (700) selon la revendication 8, dans lequel l'application successive des première, deuxième, troisième et quatrième transformations sur chacun des 5 plans d'un état correspondent respectivement à l'application des transformations ρ, θ, χ et 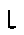 associées aux algorithmes cryptographiques de la famille KECCAK-p.

10. Circuit (700) selon la revendication 8 ou 9, dans lequel le premier plan permuté correspond à un premier plan de l'état auquel est appliqué la transformation π associée aux algorithmes cryptographiques de la famille KECCAK-p.

11. Circuit (700) selon l'une quelconque des revendication 8 à 10, dans lequel chacune des x-ème bandes de chacun des y-ème plans du premier état, x et y étant des valeurs entières entre 0 et 4 et définissant les coordonnée d'une bande dans le premier état, sont chacune associée à une valeur d'indice (***I_{x,y}***) égale à x+5y, le circuit de contrôle (706) étant configuré pour permuter les bandes du premier état en adressant la bande d'indice (X+3Y)mod 5 +5X pour le traitement de la Y-ème bande d'un X-eme plan permuté, les valeurs X et Y étant des valeur entières entre 0 et 4.

12. Circuit (700) selon l'une quelconque des revendications 1 à 11, dans lequel la mémoire (704), le circuit de contrôle (706) et le circuit cryptographique (702) sont configurés pour générer l'état de sortie en itérant une pluralité de fois, par exemple 24 fois, l'au moins une transformation sur les N plans de l'état compris dans la mémoire.

13. Circuit (700) selon l'une quelconque des revendications 1 à 12, configuré en outre pour générer une valeur de hachage sur 256 ou 384 ou 512 ou 1024 ou 1536 bits sur la base de l'état de sortie.

14. Procédé comprenant :
- la fourniture d'un premier plan permuté d'un premier état, stocké dans une mémoire (704) à un circuit cryptographique (702), le premier état comprenant N plans comprenant chacun M bandes de L bits, où N, M et L sont des entiers supérieurs ou égaux à 2 et le premier plan permuté comprenant au moins une première bande comprise dans un premier plan du premier état et une deuxième bande comprise dans un deuxième plan du premier état diffèrent du premier plan;
- effectuer une opération cryptographique sur le premier état par la génération d'un état de sortie, par le circuit cryptographique, la génération comprenant l'application d'au moins une transformation sur le premier plan permuté.

15. Procédé selon la revendication 14, comprenant en outre la génération d'une valeur de hachage sur 128 ou 256 ou 384 ou 512 bits, sur la base de l'état de sortie.
